# EUROPEAN PATENT APPLICATION

(11) **EP 4 814 088 A1**
(43) Date of publication of application: **30.09.2026**
(21) Application number: 26167518.5
(22) Date of filing: 25.03.2026
(51) Int. Cl.: C11D 3/00, C11D 3/20, C11D 3/38, C11D 17/00, C12R 1/07

(54) **COMPOSITION COMPRISING SPORES AND TRIETHYLENE GLYCOL**

(30) Priority: 25.03.2025 EP 25166032
(71) Applicant: The Procter & Gamble Company, Cincinnati, OH 45202 (US)
(72) Inventor: LANT, Neil Joseph, Newcastle upon Tyne, NE12 9BZ (GB); NJOROGE, Samuel Kimani, Cincinnati, 45202 (US)
(74) Representative: P&G Patent Belgium UK

(57) **Abstract**

A liquid fabric treatment composition comprising:
a) from about 1x10² to about 1x10⁹ CFU/g of the composition of bacterial spores;
b) from about 0.01% to about 10% by weight of the composition of triethylene glycol; and
c) from about 0.01% to about 60% by weight of the composition of a surfactant.

## Description

### FIELD OF THE INVENTION

The present invention is in the field of fabric treatment compositions. In particular, it is directed to a treatment composition comprising bacterial spores and triethylene glycol. It is also related to a method of treating a surface with the composition. The composition and method of the invention provide reduction and/or prevention of malodor on the treated surface.

### BACKGROUND OF THE INVENTION

The problem addressed in this patent application is the persistent issue of malodour on fabrics. Malodour can arise from a variety of sources, such as microbial growth, organic residues, environmental factors, or chemical reactions. The presence of malodour not only affects the quality of the environment but also has negative impacts on human comfort, well-being, and the perception of cleanliness. There is a need for an effective solution to eliminate/reduce malodour and provide a pleasant olefactory experience from fabrics.

### SUMMARY OF THE INVENTION

According to a first aspect of the invention, there is provided a liquid fabric treatment composition comprising bacterial spores, triethylene glycol and a surfactant. Preferably, the bacterial spores comprise *Bacillus* spores.

The liquid fabric treatment composition of the invention comprises:
a) from about 1x10² to about 1x10⁹ CFU/g, preferably from 1x10° to about 1x10⁷ CFU/g and more preferably from 1x10⁴ to about 1x10⁷ CFU/g of the composition of bacterial spores, preferably *Bacillus* spores;
b) from about 0.01% to about 10%, preferably from about 0.01% to about 5%, more preferably from about 0.05% to about 3% by weight of the composition of triethylene glycol; and
c) from about 0.01% to about 60%, preferably from about 1% to about 50%, more preferably from about 10% to about 50% by weight of the composition of a surfactant.

According to a second aspect of the invention, there is provided a method of treating a fabric with the composition of the invention. The method can be a cleaning process, preferably the cleaning process involve immersing the fabric in water and/or a rinsing step. Preferably, the method is a laundry process. The method can involve the delivery of the composition in the form of a fabric enhancer or a rinse additive, in the rinse. The method can involve the spraying of the composition of the invention directly on fabrics.

Lastly, there is provided the use of the composition of the invention to provide improved removal and/or prevention of malodor on fabrics.

The elements of the composition of the invention described in relation to the first aspect of the invention apply *mutatis mutandis* to the other aspects of the invention.

### DETAILED DESCRIPTION OF THE INVENTION

The present invention encompasses a fabric treatment composition comprising bacterial spores, preferably *Bacillus* spores, triethylene glycol and a surfactant. The present invention also encompasses a method of treating a fabric using the composition of the invention. The present invention also encompasses the use of the method and the composition of the invention to provide improved malodor removal and/or prevention from/on a fabric. The triethylene glycol could act as prebiotic once the spores have germinated.

As used herein, the articles "a" and "an" when used in a claim, are understood to mean one or more of what is claimed or described. As used herein, the terms "include," "includes," and "including" are meant to be non-limiting. The compositions of the present disclosure can comprise, consist essentially of, or consist of, the components of the present disclosure.

All percentages, ratios and proportions used herein are by weight percent of the composition, unless otherwise specified. All average values are calculated "by weight" of the composition, unless otherwise expressly indicated. All ratios are calculated as a weight/weight level, unless otherwise specified.

All measurements are performed at 25°C unless otherwise specified.

Unless otherwise noted, all component or composition levels are in reference to the active portion of that component or composition, and are exclusive of impurities, for example, residual solvents or by-products, which may be present in commercially available sources of such components or compositions.

### Composition

The present disclosure relates to a composition for treating fabrics. Preferably the composition of the invention comprises a surfactant system. The composition may be a cleaning composition.

The composition may be a fabric enhancer composition.

Fabrics treating compositions may include but are not limited to, laundry cleaning compositions, fabric freshening compositions, laundry prewash, laundry pretreat, laundry additives, spray products, dry cleaning agent or composition, laundry rinse additive, wash additive, post-rinse fabric treatment, ironing aid, unit dose formulation, delayed delivery formulation, detergent contained on or in a porous substrate or nonwoven sheet, and other suitable forms that may be apparent to one skilled in the art in view of the teachings herein. Such compositions may be used as a pre-laundering treatment, a post-laundering treatment, or may be added during the wash and/or rinse cycle of the laundering process.

The composition is in the form of a liquid composition. It can form part of a single-compartment pouch, a multi-compartment pouch,,etc.

The composition may include from about 30% to about 90%, or from about 50% to about 80%, by weight of the composition, of water. The pH of the composition may be optimized to facilitate bacterial spores stability.

The composition may be a cleaning or additive composition, it may be in the form of a unitized dose article, such as a pouch. Such pouches typically include a water-soluble film, such as a polyvinyl alcohol water-soluble film, that at least partially encapsulates a composition. Suitable films are available from MonoSol, LLC (Indiana, USA). The composition can be encapsulated in a single or multi-compartment pouch. A multi-compartment pouch may have at least two, at least three, or at least four compartments. A multi-compartmented pouch may include compartments that are side-by-side and/or superposed. The composition contained in the pouch or compartments thereof may be liquid, solid (such as powders), or combinations thereof. Pouched compositions may have relatively low amounts of water, for example less than about 20%, or less than about 15%, or less than about 12%, or less than about 10%, or less than about 8%, by weight of the detergent composition, of water.

The composition may comprise a non-aqueous solvent, which may act as a carrier and/or facilitate stability. Non-aqueous solvents may include organic solvents, such as methanol, ethanol, propanol, isopropanol, 1,3-propanediol, 1,2-propanediol, ethylene glycol, glycerine, glycol ethers, hydrocarbons, or mixtures thereof. Other non-aqueous solvents may include lipophilic fluids such as siloxanes or other silicones, hydrocarbons, perfluorinated amines, perfluorinated and hydrofluoroether solvents, or mixtures thereof. Amine-containing solvents, such as monoethanolamine, diethanolamine and triethanolamine, may be suitable.

Especially preferred compositions herein are laundry compositions.

### Bacterial spores

The composition of the invention comprises from about 1x10² to about 1x10⁹ CFU/g, preferably from 1x10³ to about 1x10⁷ CFU/g and more preferably from 1x10⁴ to about 1x10⁷ CFU/g of the composition of bacterial spores, preferably *Bacillus* spores. Although bacterial spores can be present on surfaces, the method of the invention involves the intentional addition of bacterial spores to the surface in an amount capable of providing a consumer noticeable benefit, in particular sustained perfume release. Preferably, the method of the invention requires the intentional addition of at least 1x10² CFU/g of surface and preferably less than 1x10⁷ CFU/g of surface. Preferably if the surface is a fabric and the fabric is treated in a laundry process then the level of bacterial spores is from about 1x10² to 1x10⁴ CFU/g of surface. And for methods involving direct applications, such as sprays, the level of bacterial spores would be from about 1x10⁴ to 1x10⁶ CFU/g of surface. By "intentional addition of bacterial spores" is herein meant that the spores are added in addition to the microorganisms that might be present on the surface.

The composition of the invention can be in the form of a fabric treatment composition and it may be added to a wash, rinse or drying cycle, preferably the composition is added into a wash or rinse cycle. The spores are not deactivated by heat at the temperatures found in a washing machine or in a dryer. The spores are fabric-substantive and provide fragrance release benefit.

The bacterial spores of the method and composition of the invention can germinate on surfaces. The spores can be activated by heat, for example, heat generated during use of the fabric or by the heat provided in the washing machine. The spores can germinate when the fabrics are stored and/or used.

The fabric can be treated in a wet laundry process, or it can be treated wet after being washed, for example in the dryer or being sprayed. Alternatively, the fabric can be treated with a composition in the form of a spray in order to refresh it, i.e, a fabric freshening composition.

Preferably, the bacterial spores for use herein: i) are capable of surviving the temperatures found in a laundry process; ii) are fabric substantive; and iii) have the ability to excrete enzymes and release the perfume from the pro-perfume material. The spores have the ability to germinate and to form cells during the use of the surface. The spores can be delivered in liquid or solid form. Preferably, the spores are in solid form.

Some gram-positive bacteria have a two-stage lifecycle in which growing bacteria under certain conditions such as in response to nutritional deprivation can undergo an elaborate developmental program leading to spores or endospores formation. The bacterial spores are protected by a coat consisting of about 60 different proteins assembled as a biochemically complex structure with intriguing morphological and mechanical properties. The protein coat is considered a static structure that provides rigidity and mainly acting as a sieve to exclude exogenous large toxic molecules, such as lytic enzymes. Spores play critical roles in long term survival of the species because they are highly resistant to extreme environmental conditions. Spores are also capable of remaining metabolically dormant for years. Methods for obtaining bacterial spores from vegetative cells are well known in the field. In some examples, vegetative bacterial cells are grown in liquid medium. Beginning in the late logarithmic growth phase or early stationary growth phase, the bacteria may begin to sporulate. When the bacteria have finished sporulating, the spores may be obtained from the medium, by using centrifugation for example. Various methods may be used to kill or remove any remaining vegetative cells. Various methods may be used to purify the spores from cellular debris and/or other materials or substances. Bacterial spores may be differentiated from vegetative cells using a variety of techniques, like phase-contrast microscopy, automated scanning microscopy, high resolution atomic force microscopy or tolerance to heat, for example. Because bacterial spores are generally environmentally-tolerant structures that are metabolically inert or dormant, they are readily chosen to be used in commercial microbial products. Despite their ruggedness and extreme longevity, spores can rapidly respond to the presence of small specific molecules known as germinants that signal favorable conditions for breaking dormancy through germination, an initial step in the process of completing the lifecycle by returning to vegetative bacteria. For example, the commercial microbial products may be designed to be dispersed into an environment where the spores encounter the germinants present in the environment to germinate into vegetative cells and perform an intended function. A variety of different bacteria may form spores. Bacteria from any of these groups may be used in the compositions, methods, and kits disclosed herein. For example, some bacteria of the following genera may form spores: *Acetonema, Alkalibacillus, Ammoniphilus, Amphibacillus, Anaerobacter, Anaerospora, Aneurinibacillus, Anoxybacillus, Bacillus, Brevibacillus, Caldanaerobacter , Caloramator, Caminicella, Cerasibacillus, Clostridium, Clostridiisalibacter, Cohnella, Dendrosporobacter, Desulfotomaculum, Desulfosporomusa, Desulfosporosinus, Desulfovirgula, Desulfunispora, Desulfurispora, Filifactor, Filobacillus, Gelria, Geobacillus, Geosporobacter, Gracilibacillus, Halonatronum, Heliobacterium, Heliophilum, Laceyella, Lentibacillus, Lysinibacillus, Mahella, Metabacterium, Moorella, Natroniella, Oceanobacillus, Orenia, Ornithinibacillus, Oxalophagus, Oxobacter, Paenibacillus, Paraliobacillus, Pelospora, Pelotomaculum, Piscibacillus, Planifilum, Pontibacillus, Propionispora, Salinibacillus, Salsuginibacillus, Seinonella, Shimazuella, Sporacetigenium, Sporoanaerobacter, Sporobacter, Sporobacterium, Sporohalobacter, Sporolactobacillus, Sporomusa, Sporosarcina, Sporotalea, Sporotomaculum, Syntrophomonas, Syntrophospora, Tenuibacillus, Tepidibacter, Terribacillus, Thalassobacillus, Thermoacetogenium, Thermoactinomyces, Thermoalkalibacillus, Thermoanaerobacter, Thermoanaeromonas, Thermobacillus, Thermoflavimicrobium, Thermovenabulum, Tuberibacillus, Virgibacillus,* and/ or *Vulcanobacillus.*

Preferably, the bacteria that may form spores are from the family *Bacillaceae,* such as species of the genera *Aeribacillus, Aliibacillus, Alkalibacillus, Alkalicoccus, Alkalihalobacillus, Alkalilactibacillus, Allobacillus, Alteribacillus, Alteribacter,Amphibacillus, Anaerobacillus,Anoxybacillus,Aquibacillus, Aquisalibacillus, Aureibacillus, Bacillus, Caldalkalibacillus, Caldibacillus, Calditerricola, Calidifontibacillus, Camelliibacillus, Cerasibacillus, Compostibacillus, Cytobacillus, Desertibacillus, Domibacillus, Ectobacillus, Evansella, Falsibacillus, Ferdinandcohnia, Fermentibacillus, Fictibacillus, Filobacillus, Geobacillus, Geomicrobium, Gottfriedia, Gracilibacillus, Halalkalibacillus, Halobacillus, Halolactibacillus, Heyndrickxia, Hydrogenibacillus, Lederbergia, Lentibacillus, Litchfieldia, Lottiidibacillus, Margalitia, Marinococcus, Melghiribacillus, Mesobacillus, Metabacillus, Microaerobacter, Natribacillus, Natronobacillus, Neobacillus, Niallia, Oceanobacillus, Ornithinibacillus, Parageobacillus, Paraliobacillus, Paralkalibacillus, Paucisalibacillus, Pelagirhabdus, Peribacillus, Piscibacillus, Polygonibacillus, Pontibacillus, Pradoshia, Priestia, Pseudogracilibacillus, Pueribacillus, Radiobacillus, Robertmurraya, Rossellomorea, Saccharococcus, Salibacterium, Salimicrobium, Salinibacillus, Salipaludibacillus, Salirhabdus, Salisediminibacterium, Saliterribacillus, Salsuginibacillus, Sediminibacillus, Siminovitchia, Sinibacillus, Sinobaca, Streptohalobacillus, Sutcliffiella, Swionibacillus, Tenuibacillus, Tepidibacillus, Terribacillus, Terrilactibacillus, Texcoconibacillus, Thalassobacillus, Thalassorhabdus, Thermolongibacillus, Virgibacillus, Viridibacillu, Vulcanibacillus, Weizmannia.* In various examples, the bacteria may be strains of *Bacillus Bacillus acidicola, Bacillus aeolius, Bacillus aerius, Bacillus aerophilus, Bacillus albus, Bacillus altitudinis, Bacillus alveayuensis, Bacillus amyloliquefaciensex, Bacillus anthracis, Bacillus aquiflavi, Bacillus atrophaeus, Bacillus australimaris, Bacillus badius, Bacillus benzoevorans, Bacillus cabrialesii, Bacillus canaveralius, Bacillus capparidis, Bacillus carboniphilus, Bacillus cereus, Bacillus chungangensis, Bacillus coahuilensis, Bacillus cytotoxicus, Bacillus decisifrondis, Bacillus ectoiniformans, Bacillus enclensis, Bacillus fengqiuensis, Bacillus fungorum, Bacillus glycinifermentans, Bacillus gobiensis, Bacillus halotolerans, Bacillus haynesii, Bacillus horti, Bacillus inaquosorum, Bacillus infantis, Bacillus infernus, Bacillus isabeliae, Bacillus kexueae, Bacillus licheniformis, Bacillus luti, Bacillus manusensis, Bacillus marinisedimentorum, Bacillus mesophilus, Bacillus methanolicus, Bacillus mobilis, Bacillus mojavensis, Bacillus mycoides, Bacillus nakamurai, Bacillus ndiopicus, Bacillus nitratireducens, Bacillus oleivorans, Bacillus pacificus, Bacillus pakistanensis, Bacillus paralicheniformis, Bacillus paramycoides, Bacillus paranthracis, Bacillus pervagus, Bacillus piscicola, Bacillus proteolyticus, Bacillus pseudomycoides, Bacillus pumilus, Bacillus safensis, Bacillus salacetis, Bacillus salinus, Bacillus salitolerans, Bacillus seohaeanensis, Bacillus shivajii, Bacillus siamensis, Bacillus smithii, Bacillus solimangrovi, Bacillus songklensis, Bacillus sonorensis, Bacillus spizizenii, Bacillus spongiae, Bacillus stercoris, Bacillus stratosphericus, Bacillus subtilis, Bacillus swezeyi, Bacillus taeanensis, Bacillus tamaricis, Bacillus tequilensis, Bacillus thermocloacae, Bacillus thermotolerans, Bacillus thuringiensis, Bacillus tianshenii, Bacillus toyonensis, Bacillus tropicus, Bacillus vallismortis, Bacillus velezensis, Bacillus wiedmannii, Bacillus wudalianchiensis, Bacillus xiamenensis, Bacillus xiapuensis, Bacillus zhangzhouensis,* or combinations thereof.

In some examples, the bacterial strains that form spores may be strains of *Bacillus,* including: *Bacillus sp.* strain SD-6991; *Bacillus sp.* strain SD-6992; *Bacillus sp.* strain NRRL B-*50606; Bacillus sp.* strain NRRL B-50887; *Bacillus pumilus* strain NRRL B-50016; *Bacillus amyloliquefaciens* strain NRRL B-50017; *Bacillus amyloliquefaciens* strain PTA-7792 (previously classified as *Bacillus atrophaeus*); *Bacillus amyloliquefaciens* strain PTA-7543 (previously classified as *Bacillus atrophaeus*); *Bacillus amyloliquefaciens* strain NRRL B-50018; *Bacillus amyloliquefaciens* strain PTA-7541; *Bacillus amyloliquefaciens* strain PTA-7544; *Bacillus amyloliquefaciens* strain PTA-7545; *Bacillus amyloliquefaciens* strain PTA-7546; *Bacillus subtilis* strain PTA-7547; *Bacillus amyloliquefaciens* strain PTA-7549; *Bacillus amyloliquefaciens* strain PTA-7793; *Bacillus amyloliquefaciens* strain PTA-7790; *Bacillus amyloliquefaciens* strain PTA-7791; *Bacillus subtilis* strain NRRL B-50136 (also known as DA-33R, ATCC accession No. 55406); *Bacillus amyloliquefaciens* strain NRRL B-50141; *Bacillus amyloliquefaciens* strain NRRL B-50399; *Bacillus licheniformis* strain NRRL B-50014; *Bacillus licheniformis* strain NRRL B-50015; *Bacillus amyloliquefaciens* strain NRRL B-50607; *Bacillus subtilisstrain* NRRL B-50147 (also known as 300R); *Bacillus amyloliquefaciens* strain NRRL B-*50150; Bacillus amyloliquefaciens* strain NRRL B-50154; *Bacillus megaterium* PTA-3142; *Bacillus amyloliquefaciens* strain ATCC accession No. 55405 (also known as 300); *Bacillus amyloliquefaciens* strain ATCC accession No. 55407 (also known as PMX); *Bacillus pumilus* NRRL B-50398 (also known as ATCC 700385, PMX-1, and NRRL B-50255); *Bacillus cereus* ATCC accession No. 700386; *Bacillus thuringiensis* ATCC accession No. 700387 (all of the above strains are available from Novozymes, Inc., USA); *Bacillus amyloliquefaciens* FZB24 (e.g., isolates NRRL B-50304 and NRRL B-50349 TAEGRO^{®} from Novozymes), *Bacillus pumilus* (e.g., isolate NRRL B-50349 from Bayer CropScience), *Bacillus amyloliquefaciens TrigoCor* (also known as "TrigoCor 1448"; e.g., isolate Embrapa Trigo Accession No. 144/88.4Lev, Cornell Accession No.Pma007BR-97, and ATCC accession No. 202152, from Cornell University, USA) and combinations thereof.

In some examples, the bacterial strains that form spores may be strains of *Bacillus amyloliquefaciens.* For example, the strains may be *Bacillus amyloliquefaciens* strain PTA-7543 (previously classified as *Bacillus atrophaeus*), and/or *Bacillus amyloliquefaciens* strain NRRL B-50154, *Bacillus amyloliquefaciens* strain PTA-7543 (previously classified as *Bacillus atrophaeus*), *Bacillus amyloliquefaciens* strain NRRL B-50154, or from other *Bacillus amyloliquefaciens* organisms.

In some examples, the bacterial strains that form spores may be *Brevibacillus spp.,* e.g., *Brevibacillus brevis; Brevibacillus formosus; Brevibacillus laterosporus; or Brevibacillus parabrevis,* or combinations thereof.

In some examples, the bacterial strains that form spores may be *Paenibacillus spp.,* e.g., *Paenibacillus alvei; Paenibacillus amylolyticus; Paenibacillus azotofixans; Paenibacillus cookii; Paenibacillus macerans; Paenibacillus polymyxa; Paenibacillus validus,* or combinations thereof.

The bacterial spores may have an average particle diameter of about 2-50 microns, suitably about 10-45 microns. *Bacillus* spores are commercially available in blends in aqueous carriers and are insoluble in the aqueous carriers. Other commercially available bacillus spore blends include without limitation Freshen Free^{™} CAN (10X), available from Novozymes Biologicals, Inc.; Evogen^{®} Renew Plus (10X), available from Genesis Biosciences, Inc.; and Evogen^{®} GT (10X, 20X and 110X), all available from Genesis Biosciences, Inc. In the foregoing list, the parenthetical notations (10X, 20X, and 110X) indicate relative concentrations of the Bacillus spores.

Bacterial spores used in the compositions, methods, and products disclosed herein may or may not be heat activated. In some examples, the bacterial spores are heat activated. In some examples, the bacterial spores are not heat inactivated. Preferably, the spores used herein are heat activated. Heat activation may comprise heating bacterial spores from room temperature (15-25°C) to optimal temperature of between 25-120°C, preferably between 40C-100°C, and held the optimal temperature for not more than 2 hours, preferably between 70-80°C for 30 min.

For the methods and compositions disclosed herein, populations of bacterial spores are generally used. In some examples, a population of bacterial spores may include bacterial spores from a single strain of bacterium. Preferably, a population of bacterial spores may include bacterial spores from 2, 3, 4, 5, or more strains of bacteria. Generally, a population of bacterial spores contains a majority of spores and a minority of vegetative cells. In some examples, a population of bacterial spores does not contain vegetative cells. In some examples, a population of bacterial spores may contain less than about 1%, 2%, 3%, 4%, 5%, 6%, 7%, 8%, 9%, 10%, 15%, 20%, 25%, 30%, 40%, or 50% vegetative cells, where the percentage of bacterial spores is calculated as ((vegetative cells/ (spores in population + vegetative cells in population)) x 100). Generally, populations of bacterial spores used in the disclosed methods, compositions and products are stable (i.e. not undergoing germination), with at least some individual spores in the population capable of germinating.

Suitable cleaning ingredients include at least one of a surfactant system, an enzyme, an enzyme stabilizing system, a detergent builder, a chelating agent, a complexing agent, clay soil removal/anti-redeposition agents, polymeric soil release agents, polymeric dispersing agents, polymeric grease cleaning agents, a dye transfer inhibiting agent, a bleaching agent, a bleach activator, a bleaching catalyst, a fabric conditioner, a clay, a foam booster, an anti-foam, a suds suppressor, an anti-corrosion agent, a soil-suspending agent, a dye, a hueing dye, a bactericide, a tarnish inhibitor, an optical brightener, a perfume, a saturated or unsaturated fatty acid, a calcium cation, a magnesium cation, a visual signaling ingredient, a structurant, a thickener, an anti-caking agent, a starch, sand, a gelling agents, or any combination thereof.

Surfactant System: The composition may comprise a surfactant system in an amount sufficient to provide desired cleaning properties. In some embodiments, the composition comprises, by weight of the composition, from about 0.1% to about 70% of a surfactant system, preferably from about 0.5% to about 60% of the surfactant system. Preferably, the composition comprises, by weight of the composition, from about 1% to about 30% of the surfactant system. In the case of a ready-to-use hard cleaning surface composition, the composition may comprise from 0.01% to 5%, preferably from 0.1% to 4% by weight of the composition of surfactant system. The surfactant system may comprise a detersive surfactant selected from anionic surfactants, nonionic surfactants, cationic surfactants, zwitterionic surfactants, amphoteric surfactants, ampholytic surfactants, and mixtures thereof. Those of ordinary skill in the art will understand that a detersive surfactant encompasses any surfactant or mixture of surfactants that provide cleaning, stain removing, or laundering benefit to soiled material. Preferably, the surfactant system when present in the composition of the invention comprises and anionic surfactant and a non-ionic surfactant.

Anionic Surfactant. Non-limiting examples of suitable anionic surfactants include any conventional anionic surfactant, such as linear alkylbenzenesulfonate (LAS), alpha-olefinsulfonate (AOS), alkyl sulfate (fatty alcohol sulfate) (AS), alcohol ethoxysulfate (AEOS or AES), secondary alkanesulfonates (SAS), alpha-sulfo fatty acid methyl esters, alkyl- or alkenylsuccinic acid, or soap.

Nonionic surfactant. Suitable nonionic surfactants useful herein can comprise any conventional nonionic surfactant. These can include, for e.g., alkoxylated fatty alcohols and amine oxide surfactants. Other non-limiting examples of nonionic surfactants useful herein include: C₈-C₁₈ alkyl ethoxylates, such as, NEODOL^{®} nonionic surfactants from Shell; C₆-C₁₂ alkyl phenol alkoxylates wherein the alkoxylate units may be ethyleneoxy units, propyleneoxy units, or a mixture thereof; C₁₂-C₁₈ alcohol and C₆-C₁₂ alkyl phenol condensates with ethylene oxide/propylene oxide block polymers such as Pluronic^{®} from BASF; C₁₄-C₂₂ mid-chain branched alcohols (BA); C₁₄-C₂₂ mid-chain branched MEA (BAE*ₓ*), wherein *x* is from 1 to 30; polyhydroxy fatty acid amides; and ether capped poly(oxyalkylated) alcohol surfactants. Suitable nonionic detersive surfactants also include alkyl alkoxylated alcohol. Suitable nonionic surfactants also include those sold under the tradename Lutensol^{®} from BASF.

Cationic Surfactant. The surfactant system may comprise a cationic surfactant. When the composition of the invention is a cleaning composition, the compposition is preferably free of cationic surfactant. When the composition is a fabric enahncer, the composition preferably comprises a cationic surfactant. Non-limiting examples of cationic surfactants include: the quaternary ammonium surfactants, which can have up to 26 carbon atoms include: alkoxylate quaternary ammonium (AQA) surfactants; dimethyl hydroxyethyl quaternary ammonium; dimethyl hydroxyethyl lauryl ammonium chloride; polyamine cationic surfactants; cationic ester surfactants; and amino surfactants, specifically amido propyldimethyl amine (APA).

Zwitterionic Surfactant. Examples of zwitterionic surfactants include: derivatives of secondary and tertiary amines, derivatives of heterocyclic secondary and tertiary amines, or derivatives of quaternary ammonium, quaternary phosphonium or tertiary sulfonium compounds. Betaines, including alkyl dimethyl betaine and cocodimethyl amidopropyl betaine, C₈ to C₁₈ (for example from C₁₂ to C₁₈) amine oxides and sulfo and hydroxy betaines, such as N-alkyl-N,N-dimethylammino-1-propane sulfonate where the alkyl group can be C₈ to C₁₈ and in certain embodiments from C₁₀ to C₁₄.

Amphoteric Surfactant. Examples of amphoteric surfactants include aliphatic derivatives of secondary or tertiary amines, or aliphatic derivatives of heterocyclic secondary and tertiary amines in which the aliphatic radical may be straight- or branched-chain and where one of the aliphatic substituents contains at least about 8 carbon atoms, typically from about 8 to about 18 carbon atoms, and at least one of the aliphatic substituents contains an anionic water-solubilizing group, e.g. carboxy, sulfonate, sulfate. Examples of compounds falling within this definition are sodium 3-(dodecylamino)propionate, sodium 3-(dodecylamino) propane-1-sulfonate, sodium 2-(dodecylamino)ethyl sulfate, sodium 2-(dimethylamino) octadecanoate, disodium 3-(N-carboxymethyldodecylamino)propane 1-sulfonate, disodium octadecyl-imminodiacetate, sodium 1-carboxymethyl-2-undecylimidazole, and sodium N,N-bis (2-hydroxyethyl)-2-sulfato-3-dodecoxypropylamine. Suitable amphoteric surfactants also include sarcosinates, glycinates, taurinates, and mixtures thereof.

Enzymes. Preferably the composition comprises one or more enzymes. Preferred enzymes provide cleaning performance and/or fabric care benefits. Examples of suitable enzymes include, but are not limited to, hemicellulases, peroxidases, proteases, cellulases, xylanases, lipases, phospholipases, esterases, cutinases, pectinases, mannanases, galactanases, pectate lyases, keratinases, reductases, oxidases, phenoloxidases, lipoxygenases, ligninases, pullulanases, tannases, pentosanases, malanases, β-glucanases, arabinosidases, hyaluronidase, chondroitinase, laccase, and amylases, or mixtures thereof. Preferably, when the composition of the invention is a laundry composition, it comprises an amylase, a protease, a cellulase and optionally a lipase. Preferably, the compositions of the invention are free of glucanases.

Proteases. Preferably the composition comprises one or more proteases. Suitable proteases include metalloproteases and serine proteases, including neutral or alkaline microbial serine proteases, such as subtilisins (EC 3.4.21.62). Suitable proteases include those of animal, vegetable or microbial origin. In one aspect, such suitable protease may be of microbial origin. The suitable proteases include chemically or genetically modified mutants of the aforementioned suitable proteases. In one aspect, the suitable protease may be a serine protease, such as an alkaline microbial protease or/and a trypsin-type protease. Examples of suitable neutral or alkaline proteases include:
(a) subtilisins (EC 3.4.21.62), especially those derived from *Bacillus,* such as *Bacillus sp., B. lentus, B. alkalophilus, B. subtilis, B. amyloliquefaciens, B. pumilus , B. gibsonii,* and *B. akibaii* described in WO2004067737, WO2015091989, WO2015091990, WO2015024739, WO2015143360, US 6,312,936 B1, US 5,679,630, US 4,760,025, DE102006022216A1, DE102006022224A1, WO2015089447, WO2015089441, WO2016066756, WO2016066757, WO2016069557, WO2016069563, WO2016069569.
(b) trypsin-type or chymotrypsin-type proteases, such as trypsin (*e.g.*, of porcine or bovine origin), including the *Fusarium* protease described in WO 89/06270 and the chymotrypsin proteases derived from *Cellumonas* described in WO 05/052161 and WO 05/052146.
(c) metalloproteases, especially those derived from *Bacillus amyloliquefaciens* decribed in WO07/044993A2; from *Bacillus, Brevibacillus, Thermoactinomyces, Geobacillus, Paenibacillus, Lysinibacillus* or *Streptomyces spp.* Described in WO2014194032, WO2014194054 and WO2014194117; from *Kribella alluminosa* described in WO2015193488; and from *Streptomyces and Lysobacter* described in WO2016075078.
(d) Protease having at least 90% identity to the subtilase from Bacillus sp. TY145, NCIMB 40339, described in WO92/17577 (Novozymes A/S), including the variants of this Bacillus sp TY145 subtilase described in WO2015024739, and WO2016066757.

Suitable commercially available protease enzymes include those sold under the trade names Alcalase^{®}, Savinase^{®}, Primase^{®}, Durazym^{®}, Polarzyme^{®}, Kannase^{®}, Liquanase^{®}, Liquanase Ultra^{®}, Savinase Ultra^{®}, Ovozyme^{®}, Neutrase^{®}, Everlase^{®} and Esperase^{®} by Novozymes A/S (Denmark); those sold under the tradename Maxatase^{®}, Maxacal^{®}, Maxapem^{®}, Properase^{®}, Purafect^{®}, Purafect Prime^{®}, Purafect Ox^{®}, FN3^{®}, FN4^{®}, Excellase^{®} and Purafect OXP^{®} by Dupont; those sold under the tradename Opticlean^{®} and Optimase^{®} by Solvay Enzymes; and those available from Henkel/Kemira, namely BLAP (sequence shown in Figure29 of US 5,352,604), and KAP (*Bacillus alkalophilus subtilisin* with mutations A230V + S256G + S259N) from Kao.

Amylases. Preferably the composition may comprise an amylase. Suitable alpha-amylases include those of bacterial or fungal origin. Chemically or genetically modified mutants (variants) are included. A preferred alkaline alpha-amylase is derived from a strain of *Bacillus,* such as *Bacillus licheniformis, Bacillus amyloliquefaciens, Bacillus stearothermophilus, Bacillus subtilis,* or other *Bacillus sp.,* such as *Bacillus sp.* NCIB 12289, NCIB 12512, NCIB 12513, DSM 9375 (USP 7,153,818) DSM 12368, DSMZ no. 12649, KSM AP1378 (WO 97/00324), KSM K36 or KSM K38 (EP 1,022,334). Preferred amylases include:
(a) variants described in WO 94/02597, WO 94/18314, WO96/23874 and WO 97/43424, especially the variants with substitutions in one or more of the following positions versus the enzyme listed as SEQ ID No. 2 in WO 96/23874: 15, 23, 105, 106, 124, 128, 133, 154, 156, 181, 188, 190, 197, 202, 208, 209, 243, 264, 304, 305, 391, 408, and 444.
(b) variants described in USP 5,856,164 and WO99/23211, WO 96/23873, WO00/60060 and WO 06/002643, especially the variants with one or more substitutions in the following positions versus the AA560 enzyme listed as SEQ ID No. 12 in WO 06/002643:
   26, 30, 33, 82, 37, 106, 118, 128, 133, 149, 150, 160, 178, 182, 186, 193, 203, 214, 231, 256, 257, 258, 269, 270, 272, 283, 295, 296, 298, 299, 303, 304, 305, 311, 314, 315, 318, 319, 339, 345, 361, 378, 383, 419, 421, 437, 441, 444, 445, 446, 447, 450, 461, 471, 482, 484, preferably that also contain the deletions of D183* and G184*.
(c) variants exhibiting at least 90% identity with SEQ ID No. 4 in WO06/002643, the wild-type enzyme from *Bacillus SP722,* especially variants with deletions in the 183 and 184 positions and variants described in WO 00/60060, which is incorporated herein by reference.
(d) variants exhibiting at least 95% identity with the wild-type enzyme from *Bacillus sp*.707 (SEQ ID NO:7 in US 6,093, 562), especially those comprising one or more of the following mutations M202, M208, S255, R172, and/or M261. Preferably said amylase comprises one or more of M202L, M202V, M202S, M202T, M202I, M202Q, M202W, S255N and/or R172Q. Particularly preferred are those comprising the M202L or M202T mutations.
(e) variants described in WO 09/149130, preferably those exhibiting at least 90% identity with SEQ ID NO: 1 or SEQ ID NO:2 in WO 09/149130, the wild-type enzyme from *Geobacillus Stearophermophilus* or a truncated version thereof.
(f) variants exhibiting at least 89% identity with SEQ ID NO:1 in WO2016091688, especially those comprising deletions at positions H183+G184 and additionally one or more mutations at positions 405, 421, 422 and/or 428.
(g) variants exhibiting at least 60% amino acid sequence identity with the "PcuAmyl α-amylase" from *Paenibacillus curdlanolyticus* YK9 (SEQ ID NO:3 in WO2014099523).
(h) variants exhibiting at least 60% amino acid sequence identity with the "CspAmy2 amylase" from *Cytophaga sp.* (SEQ ID NO:1 in WO2014164777).
(i) variants exhibiting at least 85% identity with AmyE from Bacillus subtilis (SEQ ID NO:1 in WO2009149271).
(j) Variants exhibiting at least 90% identity variant with the wild-type amylase from Bacillus sp. KSM-K38 with accession number AB051102.

Suitable commercially available alpha-amylases include DURAMYL^{®}, LIQUEZYME^{®}, TERMAMYL^{®}, TERMAMYL ULTRA^{®}, NATALASE^{®}, SUPRAMYL^{®}, STAINZYME^{®}, STAINZYME PLUS^{®}, FUNGAMYL^{®} and BAN^{®} (Novozymes A/S, Bagsvaerd, Denmark), KEMZYM^{®} AT 9000 Biozym Biotech Trading GmbH Wehlistrasse 27b A-1200 Wien Austria, RAPIDASE^{®} , PURASTAR^{®}, ENZYSIZE^{®}, OPTISIZE HT PLUS^{®}, POWERASE^{®} and PURASTAR OXAM^{®} (Genencor International Inc., Palo Alto, California) and KAM^{®} (Kao, 14-10 Nihonbashi Kayabacho, 1-chome, Chuo-ku Tokyo 103-8210, Japan). In one aspect, suitable amylases include NATALASE^{®}, STAINZYME^{®} and STAINZYME PLUS^{®} and mixtures thereof.

The terms "cellulase" and "cellulase enzyme" are used interchangeably herein to refer to an enzyme that hydrolyzes β-1,4-D-glucosidic linkages in cellulose, thereby partially or completely degrading cellulose. Cellulase can alternatively be referred to as "β-1,4-glucanase", for example, and can have endocellulase activity (EC 3.2.1.4), exocellulase activity (EC 3.2.1.91), or cellobiase activity (EC 3.2.1.21). A cellulase in certain embodiments herein can also hydrolyze β-1,4-D-glucosidic linkages in cellulose ether derivatives such as carboxymethyl cellulose. "Cellulose" refers to an insoluble polysaccharide having a linear chain of β-1,4-linked D-glucose monomeric units.

Lipases. Preferably the composition comprises one or more lipases, including "first cycle lipases" such as those described in U.S. Patent 6,939,702 B1 and US PA 2009/0217464. Preferred lipases are first-wash lipases. The composition may comprise a first wash lipase.

Enzyme Stabilizing System. The composition may optionally comprise from about 0.001% to about 10% by weight of the composition, of an enzyme stabilizing system. The enzyme stabilizing system can be any stabilizing system which is compatible with the detersive enzyme. In the case of aqueous detergent compositions comprising protease, a reversible protease inhibitor, such as a boron compound, including borate, 4-formyl phenylboronic acid, phenylboronic acid and derivatives thereof, or compounds such as calcium formate, sodium formate and 1,2-propane diol may be added to further improve stability.

Builder. The composition may optionally comprise a builder or a builder system. Built cleaning compositions typically comprise at least about 1% builder, based on the total weight of the composition. Liquid cleaning compositions may comprise up to about 10% builder, and in some examples up to about 8% builder, of the total weight of the composition. Granular cleaning compositions may comprise up to about 30% builder, and in some examples up to about 5% builder, by weight of the composition.

Builders selected from aluminosilicates (e.g., zeolite builders, such as zeolite A, zeolite P, and zeolite MAP) and silicates assist in controlling mineral hardness in wash water, especially calcium and/or magnesium, or to assist in the removal of particulate soils from surfaces. Suitable builders may be selected from the group consisting of phosphates, such as polyphosphates (e.g., sodium tri-polyphosphate), especially sodium salts thereof; carbonates, bicarbonates, sesquicarbonates, and carbonate minerals other than sodium carbonate or sesquicarbonate; organic mono-, di-, tri-, and tetracarboxylates, especially water-soluble nonsurfactant carboxylates in acid, sodium, potassium or alkanolammonium salt form, as well as oligomeric or water-soluble low molecular weight polymer carboxylates including aliphatic and aromatic types; and phytic acid. These may be complemented by borates, e.g., for pH-buffering purposes, or by sulfates, especially sodium sulfate and any other fillers or carriers which may be important to the engineering of stable surfactant and/or builder-containing cleaning compositions. Additional suitable builders may be selected from citric acid, lactic acid, fatty acid, polycarboxylate builders, for example, copolymers of acrylic acid, copolymers of acrylic acid and maleic acid, and copolymers of acrylic acid and/or maleic acid, and other suitable ethylenic monomers with various types of additional functionalities. Also suitable for use as builders herein are synthesized crystalline ion exchange materials or hydrates thereof having chain structure and a composition represented by the following general anhydride form: x(M₂O)·ySiO₂·zM'O wherein M is Na and/or K, M' is Ca and/or Mg; y/x is 0.5 to 2.0; and z/x is 0.005 to 1.0.

Alternatively, the composition may be substantially free of builder.
Chelating Agent. The composition may also comprise one or more metal ion chelating agents. Suitable molecules include copper, iron and/or manganese chelating agents and mixtures thereof. Such chelating agents can be selected from the group consisting of phosphonates, amino carboxylates, amino phosphonates, succinates, polyfunctionally-substituted aromatic chelating agents, 2-pyridinol-N-oxide compounds, hydroxamic acids, carboxymethyl inulins, and mixtures therein. Chelating agents can be present in the acid or salt form including alkali metal, ammonium, and substituted ammonium salts thereof, and mixtures thereof.

Additional Amines: Additional amines may be used in the composition for added removal of grease and particulates from soiled materials. The compositions may comprise from about 0.1% to about 10%, in some examples, from about 0.1% to about 4%, and in other examples, from about 0.1% to about 2%, by weight of the cleaning composition, of additional amines. Non-limiting examples of additional amines may include, but are not limited to, polyamines, oligoamines, triamines, diamines, pentamines, tetraamines, or combinations thereof. Specific examples of suitable additional amines include tetraethylenepentamine, triethylenetetraamine, diethylenetriamine, or a mixture thereof.

Dye Transfer Inhibiting Agent. The composition can further comprise one or more dye transfer inhibiting agents. Suitable dye transfer inhibiting agents include, for example, polyvinylpyrrolidone polymers, polyamine N-oxide polymers, copolymers of N-vinylpyrrolidone and N-vinylimidazole, polyvinyloxazolidones, polyvinylimidazoles, manganese phthalocyanine, peroxidases, polyvinylpyrrolidone polymers, ethylene-diamine-tetraacetic acid (EDTA); diethylene triamine penta methylene phosphonic acid (DTPMP); hydroxy-ethane diphosphonic acid (HEDP); ethylenediamine N,N'-disuccinic acid (EDDS); methyl glycine diacetic acid (MGDA); diethylene triamine penta acetic acid (DTPA); propylene diamine tetraacetic acid (PDT A); 2-hydroxypyridine-N-oxide (HPNO); or methyl glycine diacetic acid (MGDA); glutamic acid N,N-diacetic acid (N,N-dicarboxymethyl glutamic acid tetrasodium salt (GLDA); nitrilotriacetic acid (NTA); 4,5-dihydroxy-m-benzenedisulfonic acid; citric acid and any salts thereof; N-hydroxyethylethylenediaminetri-acetic acid (HEDTA), triethylenetetraaminehexaacetic acid (TTHA), N-hydroxyethyliminodiacetic acid (HEIDA), dihydroxyethylglycine (DHEG), ethylenediaminetetrapropionic acid (EDTP) and derivatives thereof or a combination thereof.

Bleaching Compounds, Bleaching Agents, Bleach Activators, and Bleach Catalysts. The compositions described herein may comprise bleaching agents, bleach activators and/or bleach catalysts. Bleaching ingredients may be present at levels of from about 1% to about 30%, and in some examples from about 5% to about 20%, based on the total weight of the composition. If present, the amount of bleach activator may be from about 0.1% to about 60%, and in some examples from about 0.5% to about 40%, of the composition. When the composition is a laundry composition in powder form, the composition preferably comprises percarbonate bleach, and a bleach activator, preferably TAED. If the composition is a laundry composition in liquid form, it is preferred that the liquid composition is substantially free of bleaching compounds.

Examples of bleaching agents include oxygen bleach, perborate bleach, percarboxylic acid bleach and salts thereof, peroxygen bleach, persulfate bleach, percarbonate bleach, and mixtures thereof.

In some examples, compositions may also include a transition metal bleach catalyst.

Bleaching agents other than oxygen bleaching agents are also known in the art and can be utilized in composition. They include, for example, photoactivated bleaching agents, or preformed organic peracids, such as peroxycarboxylic acid or salt thereof, or a peroxysulphonic acid or salt thereof.

Brightener. Optical brighteners or other brightening or whitening agents may be incorporated at levels of from about 0.01% to about 1.2%, by weight of the composition.

Commercial brighteners, which may be used herein, can be classified into subgroups, which include, but are not necessarily limited to, derivatives of stilbene, pyrazoline, coumarin, benzoxazoles, carboxylic acid, methinecyanines, dibenzothiophene-5,5-dioxide, azoles, 5- and 6-membered-ring heterocycles, and other miscellaneous agents.

In some examples, the fluorescent brightener is selected from the group consisting of disodium 4,4'-bis{[4-anilino-6-morpholino-s-triazin-2-yl]-amino}-2,2'-stilbenedisulfonate (brightener 15, commercially available under the tradename Tinopal AMS-GX by Ciba Geigy Corporation), disodium4,4'-bis {[4-anilino-6-(N-2-bis-hydroxyethyl)-s-triazine-2-yl]-amino}-2,2'-stilbenedisulonate (commercially available under the tradename Tinopal UNPA-GX by Ciba-Geigy Corporation), disodium 4,4'-bis{[4-anilino-6-(N-2-hydroxyethyl-N-methylamino)-s-triazine-2-yl]-amino}-2,2'-stilbenedisulfonate (commercially available under the tradename Tinopal 5BM-GX by Ciba-Geigy Corporation). More preferably, the fluorescent brightener is disodium 4,4'-bis {[4-anilino-6-morpholino-s-triazin-2-yl]-amino} -2,2'-stilbenedisulfonate.

The brighteners may be added in particulate form or as a premix with a suitable solvent, for example nonionic surfactant, monoethanolamine, propane diol.

Fabric Hueing Agent. The composition may comprise a fabric hueing agent (sometimes referred to as shading, bluing or whitening agents). Typically, the hueing agent provides a blue or violet shade to fabric. Hueing agents can be used either alone or in combination to create a specific shade of hueing and/or to shade different fabric types. This may be provided for example by mixing a red and green-blue dye to yield a blue or violet shade. Hueing agents may be selected from any known chemical class of dye, including but not limited to acridine, anthraquinone (including polycyclic quinones), azine, azo (e.g., monoazo, disazo, trisazo, tetrakisazo, polyazo), including premetallized azo, benzodifurane and benzodifuranone, carotenoid, coumarin, cyanine, diazahemicyanine, diphenylmethane, formazan, hemicyanine, indigoids, methane, naphthalimides, naphthoquinone, nitro and nitroso, oxazine, phthalocyanine, pyrazoles, stilbene, styryl, triarylmethane, triphenylmethane, xanthenes and mixtures thereof.

Encapsulate. The composition may comprise an encapsulate. The encapsulate may comprises a core, a shell having an inner and outer surface, where the shell encapsulates the core.

Other ingredients. The composition can further comprise silicates. Suitable silicates can include, for example, sodium silicates, sodium disilicate, sodium metasilicate, crystalline phyllosilicates or a combination thereof. In some embodiments, silicates can be present at a level of from about 1% to about 20% by weight, based on the total weight of the composition.

The composition can further comprise other conventional detergent ingredients such as foam boosters, suds suppressors, anti-corrosion agents, soil-suspending agents, anti-soil redeposition agents, dyes, bactericides, tarnish inhibiters, and/or optical brighteners.

The composition can optionally further include saturated or unsaturated fatty acids, preferably saturated or unsaturated C₁₂-C₂₄ fatty acids; deposition aids, for example, polysaccharides, cellulosic polymers, poly diallyl dimethyl ammonium halides (DADMAC), and co-polymers of DADMAC with vinyl pyrrolidone, acrylamides, imidazoles, imidazolinium halides, and mixtures thereof, in random or block configuration, cationic guar gum, cationic cellulose, cationic starch, cationic polyacylamides or a combination thereof. If present, the fatty acids and/or the deposition aids can each be present at 0.1% to 10% by weight, based on the total weight of the composition.

The composition may optionally include silicone or fatty-acid based suds suppressors; hueing dyes, calcium and magnesium cations, visual signaling ingredients, anti-foam (0.001% to about 4.0% by weight, based on the total weight of the composition), and/or a structurant/thickener (0.01% to 5% by weight, based on the total weight of the composition) selected from the group consisting of diglycerides and triglycerides, ethylene glycol distearate, microcrystalline cellulose, microfiber cellulose, biopolymers, xanthan gum, gellan gum, and mixtures thereof).

### Additive composition

The additive compositions of the present disclosure may include additional adjunct ingredients. Such adjuncts may provide additional treatment benefits to the target fabrics, and/or they may act as stabilization or processing aids to the compositions. Suitable adjuncts may include chelant, chlorine scavenger, malodor reduction materials, organic solvents, or mixtures thereof.

### Fabric enhancer

The composition of the invention can be in the form of a fabric enhancer. The fabric enhancer for use herein comprises a fabric softening active. Suitable fabric softening actives, include, but are not limited to, materials selected from the group consisting of quats, amines, fatty esters, sucrose esters, silicones, dispersible polyolefins, clays, polysaccharides, fatty oils, polymer latexes and mixtures thereof. Preferably the fabric softening active is a quaternary ammonium compound, more preferably an ester quaternary ammonium compound, even more preferably a diester quaternary ammonium compound.

Typical minimum levels of incorporation of the fabric softening active in the fabric enhancer is at least about 1%, alternatively at least about 2%, alternatively at least about at least about 3%, alternatively at least about at least about 5%, alternatively at least about 10%, and alternatively at least about 12%, by weight of the fabric enhancer. The fabric enhancer may typically comprise maximum levels of fabric softening active of about less than about 90%, alternatively less than about 40%, alternatively less than about 30%, alternatively less than about 20%, by weight of the fabric enhancer.

### Freshening Composition

The term "freshening composition" as used herein refers to compositions for providing freshness on fabrics.

A freshening composition according to the present invention comprises bacterial spores, triethylene glycol, surfactant, a perfume and preferably cyclodextrins. The composition is preferably an aqueous liquid composition comprising at least 90%, preferably at least 95% and more preferably at least 98% and less than 99.5% of water by weight of the composition. Having high levels of water enable a sprayable freshening composition while minimizing any visible residues and/or stains on fabric articles. The composition can be a Newtonian fluid having a viscosity of from 1cps to 500cps, more preferably of from 1cps to 300cps, more preferably from 1cps to 200cps, even more preferably from 1cps to 100cps and most preferably from 1cps to 50cps and especially for 1cps to 20 cps when measured at 20°C with a AD1000 Advanced Rheometer from Atlas^{®} shear rate 10 s-1 with a coned spindle of 40mm with a cone angle 2° and a truncation of ±60µm. The freshening composition is sprayable and the perfume remains solubilized to provide a phase-stable freshening composition that provides a consistent delivery of scent freshness in each spray.

In a preferred embodiment the bacterial spores are in particulate form and the freshening composition comprises a structurant system, preferably a polysaccharide system to suspend the particles. Preferably, the polysaccharide system comprises a first polysaccharide and a second polysaccharide, wherein the first polysaccharide is xanthan gum, and wherein the second polysaccharide is selected from the group consisting of tara gum, konjac gum, locust bean gum, and combinations thereof. Preferably, the first polysaccharide is present at a level of greater than 10% and less than 90%, preferably 20% to 80%, more preferably 40% to 60% by weight of the polysaccharide system. Preferably, the polysaccharide system has a weight-average molecular weight in the range of 10,000 Daltons to 15,000,000 Daltons, preferably 200,000 Daltons to 10,000,000 Daltons, more preferably 300,000 Daltons to 6,000,000 Daltons, most preferably 300,000 Daltons to 500,000 Daltons.

The fabric freshening composition may comprise from 0.01% to 3% by weight of the composition of a surfactant selected from the group consisting of nonionic surfactants, cationic surfactants, amphoteric surfactants, zwitterionic surfactants and mixtures thereof.

The fabric freshening composition may comprise from 0.01% to 5% of a solvent by weight of the composition, wherein the solvent is preferably selected from the group consisting of an alcohol, a polyol and mixtures thereof. The fabric freshening composition may comprise an anti-wrinkle agent. The fabric freshening composition may comprise a malodor counteractant, selected from the group consisting of polyols, amine functional polymers, aldehydes, and combinations thereof.

### Perfume composition (hereinafter "Perfume")

The freshening composition comprises a perfume formulated in an effective amount such that it provides a desired scent characteristic and can be homogenously solubilized in the freshening composition to deliver a consistent release profile. The perfume preferably comprises at least 60% by weight of the perfume of Perfume Raw Materials (PRMs) having a ClogP value greater than 1.0. The perfume may be in an amount of at least 0.001%, from 0.002% to 3%, from 0.005% to 1%, from 0.005% to 0.4% by weight of the composition. Suitable perfumes, perfume ingredients, and perfume carriers are disclosed in U.S. Patent No. 5,500,138 and U.S. Publication No. 2002/0035053A1.

Any type of perfume can be incorporated into the composition of the present invention. The preferred perfume ingredients are those suitable for use for application on fabrics and garments. Typical examples of such preferred ingredients are given in U.S. Patent No. 5,445,747.

The PRMs may be defined by their boiling point ("B.P.") and octanol/water partition coefficient ("P"). The boiling point referred to herein is measured under normal standard pressure of 760 mmHg. The boiling points of many PRMs, at standard 760 mm Hg, are outlined in "Perfume and Flavor Chemicals (Aroma Chemicals)," written and published by Steffen Arctander, 1969.

The term "ClogP" as used herein refers to a calculated logP ("ClogP") value of a PRM. An octanol/water partition coefficient of a PRM is the ratio between its equilibrium concentrations in octanol and in water. The partition coefficients of the PRM used in a freshening composition may more conveniently be given in the form of its logarithm to the base 10, LogP. The ClogP is determined by a model that computes the octanol-water partition coefficient (logP or logKow) for general organic molecules based directly on molecular structure. LogP is a measure of the distribution of a solute between two immiscible liquid phases, octanol and water, and is generally used as a relative measure of the hydrophobicity of a solute. One way of computing LogP of a PRM is using the ACD/Labs LogP software module from Advanced Chemistry Development, Inc. Details of the calculation of logP can be found on the ACD/Labs website (https://www.acdlabs.com/products/percepta/predictors/logp/). LogP values of PRMs calculating using the ACD/Labs LogP software module and the LogP values of PRMs are used in the selection of PRMs which are useful in the present invention as described hereafter in the Examples. However, it will be appreciated that another suitable way of measuring LogP is using the "ClogP" program from BioByte Corp (e.g., ClogP Version 4.0 and Manual 1999). CLOG P USER GUIDE, Version 4.0, BioByte Corp (1999) (http://www.bio-byte.com/bb/prod/clogp40.html). A further suitable way of measuring LogP is using CLOGP program from Daylight Chemical Information Systems, Inc. of Alison Viejo, CA. The CLOGP Reference manual, Daylight Version 4.9, Release Date 02/1/2008.

When long lasting fragrance odor on fabrics is desired, it is preferred to use at least an effective amount of perfume ingredients which have a boiling point of about 240°C or higher and preferably of about 250°C or higher. Nonlimiting examples of such preferred ingredients are given in U.S. Patent No. 5,500,138.

Other perfume ingredients can act as solvents. In some cases this can help facilitate the incorporation of other perfume or oil ingredients into the overall composition. A particularly good example here is benzyl alcohol. Benzyl alcohol has limited water solubility (clogP of about 1.2) and has been shown to help incorporate other perfume ingredient mixes into these compositions.

### Method of Treating a Fabric

The method of the present disclosure may include contacting a fabric with a product according to the present disclosure. The contacting may occur in the presence of water, in its totality or partially. The product, or part thereof, may be diluted and/or dissolved in the water to form a treatment liquor.

The method of the present disclosure may include contacting a fabric with an aqueous treatment liquor. The aqueous treatment liquor may comprise from about 1x10² Colony forming units (CFUs) to about 1x10⁸ CFU/liter of wash liquor, preferably from about 1x10⁴ CFUs to about 1x10⁷ CFU /liter of wash liquor of total bacterial spores, preferably *Bacillus* spores.
The method of treating a fabric may take place in any suitable vessel, in its entirety or partially, for example it may take place in an automatic washing machine. Such machines may be top-loading machines or front-loading machines. The whole process can take place in a washing machine. Alternatively, part of the process can take place in a washing machine and part of the process can take place in a dryer. The process of the invention is also suitable for hand washing applications.

The treatment step may be part of a wash or a rinse cycle of an automatic washing machine. The aqueous treatment liquor may be an aqueous rinse liquor. A product according to the present disclosure may be added to the drawer or drum of an automatic washing machine during a wash or a rinse cycle. In a preferred embodiment, the fabric is subjected to a laundry process, in a washing machine, a detergent composition is delivered in the wash and a composition according to the invention is delivered in the rinse.

The treatment step of the method of the present disclosure may include contacting the fabric with an aqueous wash liquor. The step of contacting the fabric with an aqueous wash liquor may occur prior to contacting the fabric with an aqueous rinse liquor. Such steps may occur during a single treatment cycle. The aqueous wash liquor may comprise a cleaning composition, such as a granular or liquid laundry detergent composition, that is dissolved or diluted in water. The detergent composition may include anionic surfactant. The aqueous wash liquor may comprise from about 50 to about 5000 ppm, or from about 100 to about 1000 ppm, anionic surfactant.

The bacterial spores, preferably *Bacillus* spores may be added from an additive composition in a level of from about 0.01% to about 5% by weight of the fabric. Preferably, the bacterial spores are provided as part of beads or a part of a dryer sheet.

The fabric treated may be a natural or a synthetic fabric. Suitable synthetic fabrics include polyester, acrylic, nylon, rayon, acetate, spandex, latex, and/or orlon fabrics. The composition and method of the invention provides very good malodor removal and/or prevention on synthetic fabric.

The fabric treated may include synthetic fibers. Suitable synthetic fibers may include polyester, acrylic, nylon, rayon, acetate, spandex, latex, and/or orlon fibers. The fibers may be elastic and/or contain elastane. The fabric may contain blends of synthetic fibers and natural fibers (e.g., a polycotton blend). The fabric may comprise fibers that are relatively hydrophobic (for example, compared to cotton fibers).

### EXAMPLES

### Example 1: Bacillus Spore - Triethylene Glycol (TEG) Product

Four products were tested to assess the malodor reduction benefit on towels with intense malodor. All the products regimen comprised of Composition 1 which was the standard wash liquid Tide detergent, and additional product/s as follows. Product 1 comprised of ("Composition 1 only") as control, Product 2 comprised of ("Compositions 1 & 2"), Product 3 comprised of ("Compositions1 & 3") both as comparative products and the inventive Product 4 comprised of ("Compositions 1,2 & 3"). Unless stated otherwise, to make the rinse liquor the *Bacillus* spores (Genesis Biosciences, Cardiff, UK) were prepared in deionized ASTM Type II water (CAS Number: 7732-18-5, VWR, West Chester, PA) to make Composition 2 and for the Composition 3 rinse liquor was prepared similarly in deionized ASTM Type II water (CAS Number: 7732-18-5, VWR, West Chester, PA) and comprised of Triethylene glycol (CAS #112-27-6) which is commercially available from Sigma-Aldrich Inc. (St. Louis MO 63103 USA). TABLE 1 below shows the four Products and their description used for the Through-the-Wash (TTW) and Through-the-Rinse (TTR) laundry wash test. Composition 1 is a P&G commercial laundry detergent (Tide^{®} Original Scent, HE, Lot 105A0009D) obtained from Kroger Store, Cincinnati, OH 45217, USA) and was used in all the TTW tests.

### Example 2: Rebloomed Malodor Reduction

The towels with intense malodor were cut into square swatches measuring (2 x 2 Inches) and washed in four different wash machines provided with each product to deliver Through-the-Wash (TTW) and Through-the-Rinse (TTR) concentrations shown in TABLE 1.

| TABLE 1 | TTW Concentrations | TTR Concentrations | | Total Concentrations [ppm/CFUs/. wt.%] |
|---|---|---|---|---|
| | Composition 1 (wt. %) | Composition 2 (wt. %) | Composition 3 (wt. %) | |
| Product description | Tide^{®} OS HE Liquid Detergent (wt.%) | Bacillus Spores | Triethylene glycol (TEG) | |
| Product 1 | 0.236% | - | - | 2360 ppm |
| Product 2 | 0.236% | 1.34 x10⁶ | - | 2360 ppm + 1.34 x10⁶ CFUs |
| Product 3 | 0.236% | - | 5% | 2360 ppm + 5% w/w |
| Product 4 (Inventive) | 0.236% | 1.30 x10⁴ | 2.5% | 2360 ppm + 1.30 x10⁴ CFUs + 2.5% w/w |

The laundry process comprised of 3 steps where step 1 was wash-cycle with detergent only, step 2 rinse -cycle with the rinse liquor and step 3 air drying the swatches. After the towel swatches were air dried, 2 swatches per cup were placed in sealed sterile polystyrene cups (Part number PC400 from Fabri-Kal Corp., Kalamazoo, MI 49001) and malodor rebloom for olfactory assessment was done at different time points and malodor recorded. Prior to any olfactive assessment of malodor, the towel swatches in the polystyrene cups were rebloomed by spraying with deionized ASTM Type II water (CAS Number: 7732-18-5, VWR, West Chester, PA) equivalent to 33% of fabric weight in the cup and then incubated at 37°C for 1 hr to saturate the headspace. The initial assessment was done within the first 3 hr after the reblooming process of the towel swatches. The rest of the time points were assessed after incubation for 24h, 48h and 72h at room temperature (25°C). After every rebloom process the towel swatches were allowed to equilibrate at room temperature for 30 min before olfactive assessment of the malodor. The malodor rebloom and equilibration process was repeated during every time point. Volunteer judges were selected from those familiar with bath towel malodor and were instructed to assess the headspace of the polystyrene cups (Part number PC400 from Fabri-Kal Corp., Kalamazoo, MI 49001) containing and grade malodor by assigning malodor scores to the blind bath towels samples placed in polystyrene cups (Part number PC400 from Fabri-Kal Corp., Kalamazoo, MI 49001) on a 10-point scale from 0 for no malodor to 10 for the highest malodor. For the malodor reduction test there were a total of 32 samples (8 x 4 sample set) prepared and assessed by on average of 7 volunteer judges at every time point of the malodor assessment and the average score recorded. The TABLE 2, below shows the result of this testing, with the malodor score at 95% confidence interval (95% CI) recorded from each treatment with the four products.

| TABLE 2 | | Malodor Score (no malodor =0 to highest malodor =10) | | | |
|---|---|---|---|---|---|
| Wash Treatment | | < 3 h (initial time point) p= 0.05, 95% CI | 24 h p= 0.05, 95% CI | 48 h p= 0.05, 95% CI | 72 h p= 0.05, 95% CI |
| Product 1 (Control) | Detergent only 2360 ppm | (7.0, 8.1) | (7.0, 9.8) | (7.8, 8.4) | (6.0, 8.2) |
| Product 2 (Comparative 1) | Detergent (2360 ppm) + Bacillus spore (1.34 E+06 CFUs) | (2.4, 5.3) | (3.2, 6.8) | (3.7, 5.6) | (4.1, 5.7) |
| Product 3 (Comparative 2) | Detergent (2360 ppm) + 5% Triethylene glycol | (5.4, 7.7) | (6.0, 8.5) | 5.7, 8.1) | (4.6, 6.7) |
| Product 4 (Inventive) | Detergent (2360 ppm) + Bacillus spore (1.30E+04 CFUs) + 2.5% Triethylene glycol | (1.5, 4.0) | (1.3, 4.7) | (1.0, 4.7) | (1.2, 3.5) |
| Number of judges | | 7 | 7 | 9 | 8 |
| Malodor assessment: A total of 9 volunteer judges familiar with towel malodor were recruited where on average 7 volunteer judges participated and were instructed to assess and grade malodor on consumer towel swatches and assign a malodor score from the four product treatments from no malodor to highest malodor (where, 0 = no malodor, and 10 = highest malodor). The malodor score intervals provide lower and upper limit where the true average malodor score lies at 95% confidence, (p=0.05). | | | | | |

As can be seen, and with reference to the control, Product 3 (Comparative 2) data show minimal malodor reduction by 5% TEG used alone as the through-the-rinse additive at all time points tested compared to Composition 2 (Comparative 1) comprising the *Bacillus* spores (1.34 E+06 CFUs) only as the through-the-rinse additive but which had a significant malodor reduction compared to the control treatment. The towel swatches treated with Product 4 (Inventive) comprising both a reduced amount of *Bacillus* spores (1.30E+04 CFUs) and a reduced amount of TEG (2.5% TEG) showed synergy with significant malodor reduction where malodor remained the lowest throughout the time points tested upto 72 hours on all towel swatches treated with the Product 4.

### Example 3. Spray Product Formulations with Bacillus Spore and Triethylene Glycol (TEG)

Four Fabric spray products were tested to assess the malodor reduction and refreshing benefit on pillowcase with intense malodor. The pillowcases were sourced from Kobe, Japan. Apart from the water spray used as the control, all the other products comprised of all material in Composition "A" formulated into fabric refresher product with the raw material shown in TABLE 3, and additional product/s were formulated as follows. Product 1 comprised of water only (Deionized ASTM Type II water (CAS Number: 7732-18-5, VWR, West Chester, PA) as "water spray control" and Product 2 was used as Comparative 1 and comprised of spray product of "Compositions A". Product 3 (Comparative 2) comprised of ("Compositions "B"), Product 4 (Comparative 3) comprised of ("Compositions "C") and the Product 5 (the Inventive) comprised of ("Compositions "D") in which the % formular weight of Triethylene glycol ((CAS #112-27-6) commercially available from Sigma-Aldrich Inc. St. Louis MO 63103 USA) and *Bacillus* spores (Genesis Biosciences, Cardiff, UK) were equivalent to 50% formula weight in both "Compositions "B" and "C". Unless stated otherwise, all the compositions were prepared in deionized ASTM Type II water (CAS Number: 7732-18-5, VWR, West Chester, PA). TABLE 3 shows the compositions, the description of the compositions and their corresponding spray Products 2, 3,4 & 5 used in the test are listed in TABLE 4.

| TABLE 3 | Composition A | | | | Composition B | Composition C | Composition D |
|---|---|---|---|---|---|---|---|
| Raw Material | Function | Material Activity | Active wt. % | Formula wt. % | Formula wt. % | Formula wt.% | Formula wt.% |
| Hydrogenated castor oil (HCO)¹ | Nonionic Surfactant | 90% | 1.3% | 1.44% | 1.44% | 1.44% | 1.44% |
| Dioctyl Sodium Sulfosuccinate (DOSS)² | Anionic Surfactant | 71% | 0.14% | 0.2% | 0.2% | 0.2% | 0.2% |
| Hydroxypropyl Beta Cyclodextrin³ | Malodor Reducer | 40% | 0.15% | 0.38% | 0.38% | 0.38% | 0.38% |
| Citric Acid Solution⁴ | Buffer | 50% | 0.18% | 0.37% | 0.37% | 0.37% | 0.37% |
| Trisodium Citrate Dihydrate⁵ | Buffer | 88% | 0.26% | 0.3% | 0.3% | 0.3% | 0.3% |
| Triethylene glycol (TEG)⁶ | Malodor Reducer | 99% | - | - | 5.05% | - | 2.52% |
| Bacillus spores⁷ (CFus/g) | Malodor Reducer | - | - | - | - | 0.01%^{a} | 0.005%^{b} |
| 1,2-benzisothiazoli n-3-one (BIT)⁸ | Preservative | 19% | - | 0.02% | 0.02% | 0.02% | 0.02% |
| Perfume | Fragrance | 100% | 1.51% | 1.51% | 1.51% | 1.51% | 1.51% |
| Sodium hydroxide⁹ | pH adjustment | 50% | As needed for pH | As needed for pH | As needed for pH | As needed for pH | As needed for pH |

| Deionized Water | Solvent | 100% | balance | balance | balance | balance | balance |
|---|---|---|---|---|---|---|---|
| ^{a,b} Colony forming units (CFUs) corresponding to 0.01 % = 1.34+E06^{a} and 0.005% = 1.30+E04^{b} | | | | | | | |
| ¹Emulan ELH-60 available from BASF | | | | | | | |
| ²Aerosol OT-70 Anionic surfactant available from Solvay | | | | | | | |
| ³Cavasol W7 HP TL available from Wacker | | | | | | | |
| ⁴available from Univar Solutions | | | | | | | |
| ⁵available from Archer Daniels Midland Company | | | | | | | |
| ⁶available from Sigma-Aldrich (CAS #112-27-6) | | | | | | | |
| ⁷*Bacillus* spores available from Genesis Biosciences, Cardiff, UK | | | | | | | |
| ⁸Koralone B-119 available from LANXESS | | | | | | | |
| ⁹Formosa Plastics Corporation | | | | | | | |

### Example 4: Malodor Reduction Assessment

The pillowcases with intense malodor were cut into square swatches measuring (2 x 2 Inches) and treated by spraying with products in TABLE 4. The spray process comprised of each product being pipetted into a 5 ml atomizer sprayer (0.5 Oz refillable grand cologne atomizer glass bottle from Amazon, Seattle, WA 98109). Each product was sprayed three times in the front and back of swatch delivering about 0.08g per spray. Once the product was thoroughly dispersed onto swatches, each swatch was hang-dried. This process was repeated for each product on separate swatches. Once swatches were dried, they were placed into 4 oz polystyrene cups (Part number PC400 from Fabri-Kal Corp., Kalamazoo, MI 49001) with sealed lids (Part No. PL4N; Mason, Michigan 48854) and placed into incubator at 40°C for 1 hour. The cups were removed from incubator and placed on benchtop for 30 mins to acclimatize to room temperature (22±2°C) prior to sensory evaluation by volunteer judges familiar with pillowcase malodors. The judges were not privy to the treatments and instructed to assess the headspace of the polystyrene cups (Part number PC400 from Fabri-Kal Corp., Kalamazoo, MI 49001) containing the swatches and grade malodor by assigning malodor scores to the pillowcases samples placed in each polystyrene cups on a 10-point scale from 0 for no malodor to 10 for the highest malodor. For the malodor reduction test there were a total of 40 samples (8 x 5 sample set) prepared and assessed by on average of 7 volunteer judges at every time point of the malodor assessment and the average score recorded. TABLE 4, below shows the result of this test, with the malodor score at 95% confidence interval recorded from each treatment with the five products.

| TABLE 4 | | Malodor Score (no malodor =0 to highest malodor =10) | | |
|---|---|---|---|---|
| Spray Products and Compositions | | 24h p= 0.05, 95% CI | 48 h p= 0.05, 95% CI | 72 h p= 0.05, 95% CI |
| Product 1 (Water only) | "Control" | (7.4, 8.6) | (7.6, 8.8) | (7.5, 8.7) |
| Product 2 (Comparative 1) | Compositions "A " | (6.0, 7.4) | (3.9, 6.1) | (4.0, 4.0) |
| Product 3 (Comparative 2) | Compositions ("B") | (5.3, 7.0) | (5.7, 7.3) | (6.0, 7.5) |
| Product 4 (Comparative 3) | Composition ("C") | (1.7,2.9) | (0.5, 2.9) | (2.1,3.1) |
| Product 5 (Inventive) | Composition ("D") | (1.8,2.5) | (0.3, 1.7) | (0.3, 1.5) |
| Number of judges | | 7 | 6 | 8 |
| Malodor assessment: A total of 8 volunteer judges familiar with pillowcases malodor were recruited where on average 7 volunteer judges participated and were instructed to assess and grade malodor on consumer pillowcases swatches and assign a malodor score from the four (4) product treatments from no malodor to highest malodor (where, 0 = no malodor, and 10 = highest malodor). The malodor score intervals provide lower and upper limit where the true average malodor score lies at 95% confidence, (p=0.05). | | | | |

As can be seen, and with reference to the water control, Product 3 (Comparative 2) data show minimal malodor reduction by 5% Triethylene glycol (TEG) formulated in Fabric Refresher Product 2 (Comparative 1). The TEG in the Product 3 did not improve performance in pillowcase malodor reduction overtime. Product 4 (Comparative 3) showed significant malodor reduction at 95% confidence level compared to Product 3 demonstrating that the *Bacillus* spores (1.34+E06 CFUs) improved the malodor reduction performance when formulated in the Fabric Refresher Product 2 (Comparative 1). The pillowcases treated with Product 5 (Inventive) comprising both a reduced amount of *Bacillus* spores (1.30E+04 CFUs) and a reduced amount of TEG (2.5% TEG) showed synergy with significant malodor reduction where malodor remained the lowest throughout the time points and malodor performance continued to significantly improve over time after the 48 hours to 72 hours on all pillowcase swatches treated with the Product 5.

### Example 5: Spray Product Formulations with Bacillus Spore, Triethylene Glycol (TEG) and Monopropylene Glycol (MPG)

Six (6) fabric spray products were tested in a matrix of composition to assess the malodor reduction and refreshing benefit on preselected consumer pillowcase with high malodors. The pillowcases were sourced from Kobe, Japan. Apart from the water spray used as the control, a total of six (6) separate compositions were prepared. Five (5) of the Compositions ('B', 'C', 'D', 'E', and 'F') comprised of all material in Composition 'A' which was formulated into fabric refresher product with the raw material shown in Table 5. In addition to the Compositions in Table 5, water (Deionized ASTM Type II water (CAS Number: 7732-18-5, VWR, West Chester, PA) was used as "a control composition" for the spray test. Composition 'E' is a composition according to the invention (inventive 1). The comparative compositions were, Composition 'A' (Comparative 1), Composition 'B' (Comparative 2,) Composition 'C' (Comparative 3), Composition 'D' (Comparative 4) and Composition 'F' (Comparative 5). The Inventive 1 (Composition 'E') was made to comprise a level of Triethylene glycol (TEG, CAS #112-27-6) which is commercially available from Sigma-Aldrich Inc. St. Louis MO 63103 USA) and *Bacillus* spores (Genesis Biosciences, Cardiff, UK) equivalent to 50% of the level in Compositions 'B' and 'C'. The Composition 'F' (Comparative 5) in which the level of Monopropylene glycol (MPG, CAS#57-55-6) is also commercially available from Sigma-Aldrich Inc. St. Louis MO 63103 USA) and *Bacillus* spores (Genesis Biosciences, Cardiff, UK) was made to be equivalent to 50% of the level in both "Compositions 'B' and 'D'. Unless stated otherwise, all the compositions were prepared in deionized ASTM Type II water (CAS Number: 7732-18-5, VWR, West Chester, PA). Table 5 shows the compositions and the description of the compositions used in malodor reduction spray tests.

| Table 5: Spray Compositions | | | **A** | **B** | **C** |
|---|---|---|---|---|---|
| Raw Material | Function | Material Activity | Active wt. % | wt.% | wt.% |
| Hydrogenated castor oil (HCO)¹ | Thickener | 90.0 | 1.44 | 1.44 | 1.44 |
| Dioctyl Sodium Sulfosuccinate (DOSS)² | Anionic Surfactant | 71.0 | 0.14 | 0.20 | 0.20 |
| Hydroxypropyl Beta Cyclodextrin³ | Malodor Reducer | 40.0 | 0.15 | 0.38 | 0.38 |
| Citric Acid Solution⁴ | Buffer | 50.0 | 0.18 | 0.37 | 0.37 |
| Trisodium Citrate Dihydrate⁵ | Buffer | 88.0 | 0.30 | 0.30 | 0.30 |
| Triethylene glycol (TEG)^{6a} | Malodor Reducer | 99.0 | - | - | 5.05 |
| Monopropylene glycol^{6b} | Malodor Reducer | 99.5 | - | - | - |
| *Bacillus* spores⁷ (CFus/g) | Malodor Reducer | - | - | 0.010^{a} | - |
| 1,2- benzisothiazolin-3-one (BIT)⁸ | Preservative | 19.0 | 0.02 | 0.02 | 0.02 |
| Perfume | Fragrance | 100.0 | 1.51 | 1.51 | 1.51 |
| Sodium hydroxide⁹ | pH adjustment | 50.0 | As needed | As needed | As needed |
| Deionized Water | Solvent | 100 | q.s to 100 | q.s to 100 | q.s to 100 |

| | | | | | |
|---|---|---|---|---|---|
| ^{b} Colony forming units (CFUs) corresponding to 0.01 % = 1.34+E06^{a} and 0.005% = 1.30+E04^{b 1}Emulan ELH-60 available from BASF ²Aerosol OT-70 Anionic surfactant available from Solvay ³Cavasol W7 HP TL available from Wacker ⁴available from Univar Solutions ⁵available from Archer Daniels Midland Company ^{6a}available from Sigma-Aldrich (CAS #112-27-6) ^{6b}available from Sigma-Aldrich (CAS#57-55-6) ⁷Bacillus spores available from Genesis Biosciences, Cardiff, UK ⁸Koralone B-119 available from LANXESS ⁹Formosa Plastics Corporation | | | | | |

| Table 5 (continuation): Spray Compositions | | | **D** | **E** | **F** |
|---|---|---|---|---|---|
| Raw Material | Function | Material Activity | wt.% | wt. % | wt.% |
| Hydrogenated castor oil (HCO)¹ | Thickener | 90.0 | 1.44 | 1.44 | 1.44 |
| Dioctyl Sodium Sulfosuccinate (DOSS)² | Anionic Surfactant | 71.0 | 0.20 | 0.20 | 0.20 |
| Hydroxypropyl Beta Cyclodextrin³ | Malodor Reducer | 40.0 | 0.38 | 0.38 | 0.38 |
| Citric Acid Solution⁴ | Buffer | 50.0 | 0.37 | 0.37 | 0.37 |
| Trisodium Citrate Dihydrate⁵ | Buffer | 88.0 | 0.30 | 0.30 | 0.30 |
| Triethylene glycol (TEG)^{6a} | Malodor Reducer | 99.0 | - | 2.51 | - |
| Monopropylene glycol^{6b} | Malodor Reducer | 99.5 | 5.04 | - | 2.51 |
| *Bacillus* spores⁷ (CFus/g) | Malodor Reducer | - | - | 0.005^{b} | 0.005^{b} |
| 1,2- benzisothiazolin-3-one (BIT)⁸ | Preservative | 19.0 | 0.02 | 0.02 | 0.02 |
| Perfume | Fragrance | 100.0 | 1.51 | 1.51 | 1.51 |
| Sodium hydroxide⁹ | pH adjustment | 50.0 | As needed | As needed | As needed |
| Deionized Water | Solvent | 100 | q.s to 100 | q.s to 100 | q.s to 100 |

| | | | | | |
|---|---|---|---|---|---|
| ^{b} Colony forming units (CFUs) corresponding to 0.01 % = 1.34+E06^{a} and 0.005% = 1.30+E04^{b} ¹Emulan ELH-60 available from BASF ²Aerosol OT-70 Anionic surfactant available from Solvay ³Cavasol W7 HP TL available from Wacker ⁴available from Univar Solutions ⁵available from Archer Daniels Midland Company ^{6a}available from Sigma-Aldrich (CAS #112-27-6) ^{6b}available from Sigma-Aldrich (CAS#57-55-6) ⁷Bacillus spores available from Genesis Biosciences, Cardiff, UK ⁸Koralone B-119 available from LANXESS ⁹Formosa Plastics Corporation | | | | | |

### Example 6: Malodor Reduction Assessment

The consumer pillowcases with intense malodor were sourced from the consumers in Kobe, Japan. The pillowcases were cut into square swatches measuring (2 x 2 Inches) and treated by spraying with Compositions in Table 6. The spray process comprised of each product being pipetted into a 5 ml atomizer sprayer (0.5 Oz refillable grand cologne atomizer glass bottle from Amazon, Seattle, WA 98109). Each product was sprayed three (3) times in the front and back of swatch delivering about 0.08g per spray. Once product was thoroughly dispersed onto swatches, each swatch was hang-dried to replicate Japan's preferred drying method. This process was repeated for each product on separate swatches. Once swatches were dried, they were placed into 4 oz polystyrene cups (Part number PC400 from Fabri-Kal Corp., Kalamazoo, MI 49001) with sealed lids (Part No. PL4N; Mason, Michigan 48854) and placed into incubator at 40°C for 1 hour. The cups were removed from incubator and placed on benchtop for 30 mins to acclimatize to room temperature (22±2°C) prior to sensory evaluation by volunteer judges familiar with pillowcase malodors. The judges were not privy to the treatments and instructed to assess the headspace of the polystyrene cups (Part number PC400 from Fabri-Kal Corp., Kalamazoo, MI 49001) containing the swatches and grade malodor by assigning malodor scores to the pillowcases samples placed in each polystyrene cups (Part number PC400 from Fabri-Kal Corp., Kalamazoo, MI 49001) on a 10-point scale from zero (0) for no malodor to ten (10) for the highest malodor. For the malodor reduction test there were a total of 56 samples (8 x 7 sample set) that were assessed by volunteer judges familiar with pillowcase malodors and the average score on a malodor scale of 0-10 recorded at every time point of the assessment. Table 6 shows the results of this testing with the malodor average intensity scores recorded from each treatment with of all the six (6) compositions and the water control.

| Table 6 | | Malodor intensity Score at the 3 Time Points Post Treatment (no malodor =0 to highest malodor =10) | | |
|---|---|---|---|---|
| Spray Compositions | | 24 h | 48 h | 72 h |
| Water only | "Control" composition | 5.70 ± 0.45 | 7.33 ± 0.71 | 7.78 ± 0.44 |
| Compositions "A " | Comparative 1 | 5.20 ±0.55 | 5.54 ± 0.53 | 5.11± 0.78 |
| Compositions 'B' | Comparative 2 | 2.40±0.54 | 2.33 ± 0.50 | 2.11 ± 0.33 |
| Composition 'C' | Comparative 3 | 2.8 0±0.57 | 3.30 ± 0.49 | 3.11 ± 0.33 |
| Composition 'D' | Comparative 4 | 3.40 ± 0.67 | 3.67 ± 0.51 | 3.33 ± 0.45 |
| Composition 'F' | Comparative 5 | 3.40 ± 0.55 | 2.78 ± 0.44 | 3.33 ± 0.50 |
| Composition 'E' | Inventive 1 | 2 .20± 0.45 | 1.56 ± 0.53 | 1.10 ± 0.32 |
| Number of judges | | 5 | 9 | 9 |
| **Malodor assessment:** Volunteer judges familiar with pillowcases malodor were recruited to participated in malodor reduction assessment. The judges were instructed to assess and grade malodor on consumer pillowcases swatches and assign a malodor score from the six (6) treatments | | | | |
| plus the "water only" control from no malodor to highest malodor (where, 0 = no malodor, and = highest malodor). | 10 | | | |

All evaluated compositions ('A', 'B', 'C,', 'D', 'E', & 'F)' demonstrated significant malodor reduction (at 95% confidence level) across all time points relative to the water only "control". Composition 'C' containing 5.05% Triethylene glycol (TEG), exhibited malodor reduction compared to Fabric Composition 'A' (Comparative 1) a finished Fabric Refresher product. However, the TEG in Composition 'C' (Comparative 3) did not provide an improvement in pillowcase malodor reduction over time. Similarly, Composition 'D' (Comparative 4) comprising 5.04% Monopropylene glycol (MPG), showed malodor reduction compared to Composition 'A' but no sustained malodor improvement overtime. Composition 'B' (Comparative 2) incorporating *Bacillus* spores (1.34E+06 CFUs), significantly reduced malodor compared to Fabric Composition 'A' (Comparative 1) indicating that the *Bacillus* spores improved malodor reduction performance when formulated within the Fabric Refresher (Comparative 1). Notably, Composition 'E' (Inventive), which included a reduced amount of *Bacillus* spores (1.30E+04 CFUs) and 2.51% TEG, demonstrated synergy and significant malodor reduction of the inventive composition at 95% confidence level. This synergistic effect resulted in the lowest malodor levels observed throughout the time points and sustained significant improvement in malodor performance from 24 hours to 72 hours on all treated pillowcase swatches, particularly when compared to Composition 'F' (Comparative 5) which contained the reduced *Bacillus* spores (1.30E+04 CFUs) and 2.50% MPG.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A liquid fabric treatment composition comprising:
a) from about 1x10² to about 1x10⁹ CFU/g of the composition of bacterial spores, preferably *Bacillus* spores;
b) from about 0.01% to about 10% by weight of the composition of triethylene glycol; and
c) from about 0.01% to about 60% by weight of the composition of a surfactant.

2. A composition according to claim 1 wherein the *Bacillus* is selected from the group consisting of *Bacillus subtilis, Bacillus amyloliquefaciens, Bacillus licheniformis, Bacillus megaterium, Bacillus pumilus, Bacillus cereus, Bacillus thuringiensis, Bacillus mycoides, Bacillus tequilensis, Bacillus vallismortis, Bacillus mojavensis* and mixtures thereof.

3. A composition according to the preceding claim wherein the *Bacillus* is selected from the group consisting of *Bacillus subtilis, Bacillus amyloliquefaciens, Bacillus licheniformis, Bacillus megaterium, Bacillus pumilus* and mixtures thereof.

4. A composition according to any of the preceding claims wherein the composition is a cleaning composition comprising a surfactant system.

5. The composition according to the preceding claim wherein the cleaning composition is a laundry cleaning composition and wherein the surfactant system comprises anionic surfactant and non-ionic surfactant.

6. The composition according to the preceding claim wherein the laundry composition comprises an anionic surfactant selected from the group consisting of linear alkyl benzene sulphonate, alkyl ether sulphate, alkyl sulphate and mixtures thereof.

7. The composition according to the preceding claim comprising from about 0.01% to about 10% by weight of the composition of fatty acid.

8. The composition according to the preceding claim comprising an enzyme, preferably selected from the group consisting of an amylase, protease, lipase, cellulase and a mixture thereof.

9. A composition according to the preceding claim wherein the composition comprises an adjunct comprising one or more of: peroxy compounds, bleach activators, anti-redeposition agents, neutralizers, optical brighteners, foam inhibitors, chelators, bittering agents, dye transfer inhibitors, soil release agents, water softeners, electrolytes, pH regulators, anti-graying agents, anti-crease components, bleach agents, colorants, scents, processing aids and mixtures thereof.

10. A water-soluble unit dose article comprising a water-soluble film encasing a composition according to any of the preceding claims.

11. A composition according to any of claims 1 to 3 wherein the composition is a fabric enhancer comprising a conditioning agent preferably the conditioning agent comprises a quaternary ammonium compound, more preferably an ester quaternary ammonium compound, even more preferably a diester quaternary ammonium compound.

12. A composition according to any of claims 1 to 3 wherein the composition is a fabric freshening composition comprising at least 0.001%, preferably from 0.002% to 3% by weight of the composition of perfume, preferably wherein the perfume comprises at least 60% by weight of the perfume of perfume raw materials having ClogP greater than 1.0.

13. A composition according to the preceding claim further comprising from 90% to 99.5% by weight of the composition of water.

14. A composition according to any of claims 12 or 13 comprising cyclodextrins.

15. A method of treating a fabric, the method comprising the step of treating the fabric with a composition according to any of claims 1 to 14.

16. A method of treating a fabric according to the preceding claim, wherein the method takes place in a washing machine and comprises the steps of delivering a composition according to any of claims 1 to 14 in the rinse.

17. Use of a composition according to any of claims 1 to 14 to reduce and/or prevent malodor on fabrics.
